(19) Europäisches Patentamt
European Patent Office
Office européen des brevets

(11) EP 3 225 650 A1

(12) **EUROPEAN PATENT APPLICATION**
published in accordance with Art. 153(4) EPC

(43) Date of publication:
04.10.2017 Bulletin 2017/40

(51) Int Cl.:
*C08J 5/18* (2006.01)          *B29C 47/00* (2006.01)
*B32B 5/18* (2006.01)          *C08J 9/08* (2006.01)
*B29K 105/04* (2006.01)          *B29L 7/00* (2006.01)

(21) Application number: 15862353.8

(22) Date of filing: 26.11.2015

(86) International application number:
PCT/JP2015/083206

(87) International publication number:
WO 2016/084888 (02.06.2016 Gazette 2016/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.11.2014  JP 2014241452
24.03.2015  JP 2015060520

(71) Applicant: Sumitomo Chemical Company, Ltd.
Chuo-ku
Tokyo 104-8260 (JP)

(72) Inventor: CHIBA, Shunsuke
Ichihara-shi
Chiba 299-0195 (JP)

(74) Representative: Vossius & Partner
Patentanwälte Rechtsanwälte mbB
Siebertstrasse 3
81675 München (DE)

(54) **MOLDED ARTICLE COMPRISING THERMOPLASTIC RESIN COMPOSITION**

(57) According to the present invention, provided are a molded article formed of a thermoplastic resin composition, the molded article having a mean deviation of surface frictional coefficient of 0.02 or more and 0.08 or less, a mean deviation of surface roughness of 4 $\mu$m or more and 12 $\mu$m or less, a work of compression of 0.05 gf·cm/cm$^2$ or more and 0.30 gf·cm/cm$^2$ or less, a bulk density of 0.20 g/cm$^3$ or more and 0.70 g/cm$^3$ or less, an area ratio of through-holes of less than 3%, and a thickness of 10 $\mu$m or more and 1000 $\mu$m or less, and a laminate having the molded article.

EP 3 225 650 A1

**Description**

**Technical Field**

The present invention relates to a molded article formed of a thermoplastic resin composition.

**Background Art**

Leather, Japanese paper, or synthetic resin film having ornamental characteristics are used as surface materials of stationery such as pocket-book covers and book covers, bags, purses, etc.

As a synthetic resin film having ornamental characteristics, for example, Patent Literature 1 proposes a high-gloss resin film produced by melt-extruding and stretching a resin composition containing a propylene resin and a foaming agent, and Patent Literature 2 proposes a pearlescent resin film produced by melt-extruding and stretching a resin composition containing a propylene resin, low density polyethylene, and a foaming agent. In Patent Literature 3 is described a foamed sheet having excellent surface smoothness obtained by melt-extruding a resin composition containing a propylene resin, low density polyethylene, and a foaming agent.

**Citation List**

**Patent Literature**

Patent Literature 1: Japanese Unexamined Patent Publication No. 2002-524299
Patent Literature 2: Japanese Unexamined Patent Publication No. 2007-231192
Patent Literature 3: Japanese Unexamined Patent Publication No. H9-235403

**Summary of Invention**

**Technical Problem**

However, the above films and sheet are not satisfactory in terms of a tactile feel providing a combination of a rich, moist feel as found in leather, softness as found in Japanese paper, and tenderness, and are also not satisfactory in terms of a material feel due to the lack of natural texture as found in natural leather.

Under this circumstance, an object of the present invention is to provide a molded article formed of a thermoplastic resin composition and having a tactile feel providing a combination of a rich, moist feel, softness, and tenderness, as well as a material feel providing a natural texture.

**Solution to Problem**

According to the present invention, the following molded article and laminate having the molded article are provided.

[1] A molded article formed of a thermoplastic resin composition, the molded article having a mean deviation of surface frictional coefficient (MMD) of 0.02 or more and 0.08 or less, a mean deviation of surface roughness (MMD) of 4 $\mu$m or more and 12 $\mu$m or less, a work of compression (WC) of 0.05 gf·cm/cm$^2$ or more and 0.30 gf·cm/cm$^2$ or less, a bulk density of 0.20 g/cm$^3$ or more and 0.70 g/cm$^3$ or less, an area ratio of through-holes of less than 3%, and a thickness of 10 $\mu$m or more and 1000 $\mu$m or less.

[2] The molded article according to [1], wherein the thermoplastic resin composition comprises two immiscible thermoplastic resins, and the total content of the two immiscible thermoplastic resins is 70% by weight or more, with the overall amount of all thermoplastic resins in the thermoplastic resin composition being 100% by weight.

[3] The molded article according to [2], wherein the two immiscible thermoplastic resins are two immiscible thermoplastic resins differing in transition temperature.

[4] The molded article according to [3], wherein

of the two immiscible thermoplastic resins differing in transition temperature, a first thermoplastic resin (A) being the resin with a higher transition temperature and a second thermoplastic resin (B) being the resin with a lower transition temperature have a difference in transition temperature of 30°C or more and 90°C or less, and

the content of the first thermoplastic resin (A) is 30% by weight or more and 90% by weight or less and the content of the second thermoplastic resin (B) is 10% by weight or more and 70% by weight or less, with the total amount of the first thermoplastic resin (A) and the second thermoplastic resin (B) being 100% by weight.

[5] A laminate having a layer formed of the molded article according to any one of [1] to [4] as at least one surface layer.

**Advantageous Effects of Invention**

The present invention can provide a molded article formed of a thermoplastic resin composition and having a tactile feel providing a combination of a rich, moist feel, softness, and tenderness, as well as a material feel providing a natural texture.

**Description of Embodiments**

The molded article of the present invention is a molded article formed of a thermoplastic resin composition, and the mean deviation of surface frictional coefficient (MMD) of the molded article is 0.02 or more and 0.08 or less, and, from the viewpoint of enhancing the material feel of the molded article, is preferably 0.03 or more and 0.07 or less.

The mean deviation of surface frictional coefficient (MMD) is a mean deviation of frictional coefficient obtained when a 1 cm x 1 cm terminal on which bent piano strings having a diameter of 0.5 mm are arranged is slid on the surface of the molded article under a load of 50 $gf/cm^2$ at a rate of 1 mm/sec.

The MMD is a value indicating short-distance flatness and the degree of irregularity. When the short-distance flatness is high and the degree of irregularity is small, the MMD is small. When a molded article having a small MMD is exposed to oblique light, glittering reflected light can be observed. A molded article having a large MMD has a low short-distance flatness, and therefore reflected light is unlikely to be observed when the molded article is exposed to oblique light.

The mean deviation of surface roughness (SMD) of the molded article of the present invention is 4 $\mu$m or more and 12 $\mu$m or less, and, from the viewpoint of enhancing the material feel of the molded article, is preferably 6 $\mu$m or more and 10 $\mu$m or less.

The mean deviation of surface roughness (SMD) is a mean deviation of surface roughness obtained when a terminal having a width of 5 mm, on which bent piano strings having a diameter of 0.5 mm are arranged, is slid on the surface of a molded article under a load of 10 $gf/cm^2$ at a rate of 1 mm/sec.

The SMD is close to the degree of irregularity of a molded article felt when the molded article is held between two fingers and the fingers are slid. When the SMD is small, the degree of irregularity of the molded article felt by the fingers is small.

The work of compression (WC) of the molded article of the present invention is 0.05 $gf \cdot cm/cm^2$ or more and 0.30 $gf \cdot cm/cm^2$ or less, and, from the viewpoint of enhancing the material feel of the molded article, is preferably 0.08 $gf \cdot cm/cm^2$ or more and 0.25 $gf \cdot cm/cm^2$ or less.

The work of compression (WC) is a work of compression per unit area of compression when the molded article is pressurized from above at a constant rate of 0.02 mm/sec until the maximum load of compression reaches 50 $gf/cm^2$.

The WC is a value indicating the repulsive force felt when the molded article is compressed. When the WC is large, the repulsive force felt when the molded article is compressed is large.

The bulk density of the molded article of the present invention is 0.20 $g/cm^3$ or more and 0.70 $g/cm^3$ or less. The bulk density is the ratio of the weight to the outer-size volume of the molded article, i.e., a value obtained by dividing the weight by the volume calculated from the outer size of the molded article. The bulk density of the molded article decreases with, for example, increase in the number of closed cells inside the molded article and increase in surface roughness. The bulk density is, from the viewpoint of enhancing the material feel of the molded article, preferably 0.25 $g/cm^3$ or more and 0.60 $g/cm^3$ or less.

The area ratio of through-holes in the molded article of the present invention is less than 3%. It is preferable that the area ratio of through-holes be less than 1%. The through-holes are holes penetrating the molded article in the thickness direction. The area ratio of through-holes is the proportion of the area occupied by the openings of through-holes on the surface of the molded article, with the surface area of the molded article being 100%, i.e., the ratio of the area of through-hole portions to the surface area of the molded article being 100%, and can be determined by performing an image analysis on a surface image of the molded article. In the image analysis, through-holes having a diameter of 350 $\mu$m or more are regarded as through-holes of the present invention. When a through-hole is not circular, the diameter means the maximum distance between two points on the circumference of the through-hole. Specifically, the area ratio of through-holes can be determined by analyzing with image analysis software an image obtained by using an image analyzer.

The thickness of the molded article of the present invention is 10 $\mu$m or more and 1000 $\mu$m or less and preferably 30 $\mu$m or more and 500 $\mu$m or less from the view point of providing the molded article with a tactile feel providing a combination of a rich, moist feel, softness, and tenderness, as well as a material feel providing a natural texture.

The thicknesses taken at 9 points, namely, 3 points lengthwise $\times$ 3 points widthwise, at roughly equal intervals within a randomly selected portion having a length of 50 mm and a width of 50 mn of the molded article are measured using a thickness gauge, and the average of the thicknesses of the 9 points is regarded as the thickness of the molded article.

The molded article of the present invention is preferably a film or a sheet.

A preferable method for producing the molded article of the present invention is a method including a foamed sheet preparation step of preparing a foamed sheet by melt-extruding a thermoplastic resin composition containing a foaming agent, and a stretching step of biaxially stretching the foamed sheet obtained in the foamed sheet preparation step. It is preferable for the thermoplastic resin composition to contain two immiscible thermoplastic resins, and preferable to contain two immiscible thermoplastic resins differing in transition temperature.

In order to produce the molded article of the present invention, it is preferable that in the above production method, the size of cells in the foamed sheet be not uniform.

When the thermoplastic resin composition contains two immiscible thermoplastic resins differing in transition temperature, the immiscible thermoplastic resins in the foamed sheet obtained in the foamed sheet preparation step are phase-separated, and the foamed sheet is likely to be non-uniform in thickness, appearance, cell size, etc. When such a foamed sheet is stretched, uneven stretching occurs during stretching that, among the thermoplastic resins phase-separated in the foamed sheet, portions composed of a resin with a lower transition temperature are more preferentially stretched than portions composed of a resin with a higher transition temperature, and the portions composed of a resin with a higher transition temperature are unlikely to be stretched. Also, some cells of the foamed sheet break due to stretching, and when cells break in the vicinity of the surface of the foamed sheet, irregularities are formed on the surface of the foamed sheet. Due to uneven stretching, irregularities, cells, etc. which have thus occurred, a molded article satisfying the requirements of the present invention is obtained in which portions where the resins are densely gathered and portions where the resins are not densely gathered are finely mixed. This molded article has a tactile feel providing a combination of a rich, moist feel as found in leather, softness as found in Japanese paper, and tenderness, as well as a material feel providing a natural texture as found in natural leather.

Examples of the thermoplastic resins include crystalline thermoplastic resins and amorphous thermoplastic resins. As thermoplastic resins, thermoplastic resins with a transition temperature of 40°C or more are preferable. Also, thermoplastic resins with a transition temperature of 180°C or less are preferable. Here, the transition temperature, in the case of a crystalline thermoplastic resin, is the melting peak temperature of the resin, and, in the case of an amorphous thermoplastic resin, is the glass transition temperature of the resin, and both can be obtained by differential scanning calorimetry.

Examples of the thermoplastic resins include an olefin resin, a styrene resin, a methacrylic resin, an acrylic resin, an ester resin, and an amide resin, and preferably an olefin resin and a methacrylic resin.

The olefin resin is a resin containing 50% by weight or more of a structural unit derived from an olefin having 2 or more and 10 or less carbon atoms. Examples of the olefin having 2 or more and 10 or less carbon atoms include ethylene, propylene, 1-butene, 4-methyl-1-pentene, 1-hexene, 1-octene, and 1-decene.

The olefin resin may contain a structural unit derived from a monomer other than the olefin having 2 or more and 10 or less carbon atoms. Examples of the monomer other than the olefin having 2 or more and 10 or less carbon atoms include aromatic vinyl monomers such as styrene; unsaturated carboxylic acids such as acrylic acid and methacrylic acid; unsaturated carboxylic acid esters such as methyl acrylate, ethyl acrylate, butyl acrylate, methyl methacrylate, and ethyl methacrylate; vinyl ester compounds such as vinyl acetate; conjugated dienes such as 1,3-butadiene and 2-methyl-1,3-butadiene (isoprene); and nonconjugated dienes such as dicyclopentadiene and 5-ethylidene-2-norbornene.

It is preferable that the olefin resin be an ethylene resin, a propylene resin, or a butene resin.

The ethylene resin is a resin containing 50% by weight or more of a structural unit derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. Two or more ethylene resins may be used.

The propylene resin is a resin containing 50% by weight or more of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. Two or more propylene resins may be used.

The butene resin is a resin containing 50% by weight or more of a structural unit derived from 1-butene, and examples thereof include a 1-butene homopolymer, a 1-butene-ethylene copolymer, a 1-butene-propylene copolymer, a 1-butene-1-hexene copolymer, a 1-butene-1-octene copolymer, a 1-butene-ethylene-propylene copolymer, a 1-butene-ethylene-1-hexene copolymer, a 1-butene-ethylene-1-octene copolymer, a 1-butene-propylene-1-hexene copolymer, and a 1-butene-propylene-1-octene copolymer. Two or more butene resins may be used.

The styrene resin is a resin containing 50% by weight or more of a structural unit derived from styrene or a styrene derivative, and examples thereof include polystyrene, poly(p-methylstyrene), poly($\alpha$-methylstyrene), poly(p-t-butylstyrene), poly(p-methoxystyrene), an AS (acrylonitrile/styrene copolymer) resin, and a styrene-butadiene block copolymer.

The methacrylic resin is a resin containing 50% by weight or more of a structural unit derived from a methacrylic acid ester, and examples thereof include poly(methyl methacrylate), poly(ethyl methacrylate), poly(butyl methacrylate), and poly(2-ethylhexyl methacrylate).

The acrylic resin is a resin containing 50% by weight or more of a structural unit derived from an acrylic acid ester, and examples thereof include poly(methyl acrylate), poly(ethyl acrylate), poly(butyl acrylate), and poly(2-ethylhexyl acrylate).

The ester resin is a resin containing 50% by weight or more of a structural unit derived from an ester of a polycarboxylic acid and a polyhydric alcohol, and examples thereof include polyethylene terephthalate, polyethylene naphthalate, polybutylene terephthalate, and polybutylene naphthalate.

The amide resin is a resin containing 50% by weight or more of a structural unit repeated with an amide bond, and examples include poly(ε-caprolactam), polydodecanamide, poly(hexamethylene adipamide), poly(hexamethylene dodecanamide), poly(p-phenylene terephthalamide), and poly(m-phenylene terephthalamide).

As a method for producing the above thermoplastic resins, a known polymerization method is used in which a known polymerization catalyst is used.

When the thermoplastic resin composition contains two immiscible thermoplastic resins, it is preferable that the total content of the two immiscible thermoplastic resins be 70% by weight or more, with the overall amount of all thermoplastic resins in the thermoplastic resin composition being 100% by weight. When the thermoplastic resin composition contains two immiscible thermoplastic resins, examples of combinations of two immiscible thermoplastic resins include an olefin resin and another olefin resin, an olefin resin and a styrene resin, an olefin resin and a methacrylic resin, an olefin resin and an acrylic resin, an olefin resin and an ester resin, and an olefin resin and an amide resin, preferably an olefin resin and another olefin resin, and an olefin resin and a methacrylic resin, and more preferably a propylene resin and an ethylene resin, and a propylene resin and a methacrylic resin. When the thermoplastic resin composition contains two immiscible thermoplastic resins and further contains a thermoplastic resin different from the two immiscible thermoplastic resins, the further thermoplastic resin may be miscible with one of the two immiscible thermoplastic resins, or may be immiscible with any of the two immiscible thermoplastic resins.

It is more preferable that two immiscible thermoplastic resins differing in transition temperature be contained in the thermoplastic resin composition used in the production of the molded article of the present invention. When, of the two immiscible thermoplastic resins, the thermoplastic resin with a higher transition temperature is named a first thermoplastic resin (A) and the thermoplastic resin with a lower transition temperature is named a second thermoplastic resin (B), it is preferable from the viewpoint of enhancing the material feel of the molded article that the content of the first thermoplastic resin (A) be 30% by weight or more and 90% by weight or less and the content of the second thermoplastic resin (B) be 10% by weight or more and 70% by weight or less in the thermoplastic resin composition, with the total of the contents of the thermoplastic resin (A) and the second thermoplastic resin (B) in the first thermoplastic resin composition being 100% by weight, and the total content of the first thermoplastic resin (A) and the second thermoplastic resin (B) in the thermoplastic resin composition be 70% by weight or more, with the overall amount of all thermoplastic resins in the thermoplastic resin composition being 100% by weight. Herein, the transition temperature is the melting peak temperature of a resin when the resin is a crystalline thermoplastic resin or is the glass transition temperature of a resin when the resin is an amorphous thermoplastic resin, and both can be obtained by differential scanning calorimetry. It is preferable that the difference between the transition temperatures of the first thermoplastic resin (A) and the second thermoplastic resin (B) be 30°C or more and 90°C or less, and more preferably 40°C or more and 80°C or less.

It is more preferable that in the thermoplastic resin composition, the content of the first thermoplastic resin (A) be 40% by weight or more and 80% by weight or less, and the content of the second thermoplastic resin (B) be 20% by weight or more and 60% by weight or less, with the total of the contents of the first thermoplastic resin (A) and the second thermoplastic resin (B) in the thermoplastic resin composition being 100% by weight. In order to increase the WC of the molded article, it is preferable to increase the content of the second thermoplastic resin (B).

The melt mass flow rate (MFR(A)) of the first thermoplastic resin (A) measured under conditions having a temperature of 230°C and a load of 2.16 kgf in accordance with JIS K 7210-1999 is preferably 1 g/10 min or more and 30 g/10 min or less.

It is preferable that the melt mass flow rate (MFR(A)) of the first thermoplastic resin (A) measured under conditions having a temperature of 230°C and a load of 2.16 kgf in accordance with JIS K 7210-1999 and the melt mass flow rate (MFR(B)) of the second thermoplastic resin (B) measured under conditions having a temperature of 190°C and a load of 2.16 kgf in accordance with JIS K 7210-1999 satisfy the following formula (1) and, more preferably, satisfy the following formula (2).

$$0.3 < |\log(\text{MFR(A)}) - \log(\text{MFR(B)})| \quad \text{formula (1)}$$

$$0.5 < |\log(\text{MFR(A)}) - \log(\text{MFR(B)})| \quad \text{formula (2)}$$

It is more preferable that MFR(A) and MFR(B) satisfy the following formula (3).

$$|\log(\text{MFR(A)}) - \log(\text{MFR(B)})| \leq 1.5 \quad \text{formula (3)}$$

In order to increase the MMD, it is preferable to reduce |log(MFR(A)) - log(MFR(B))|. It is considered that when |log(MFR(A)) - log(MFR(B))| is large, the difference between the flowabilities of the first thermoplastic resin (A) and the second thermoplastic resin (B) is large, and in the stretching step during the production of the molded article, a thermoplastic resin having a larger flowability flows and flattens fine irregularities on the surface by the time when the molded article is cooled and solidified after being stretched, thus resulting in a small MMD.

It is preferable that the first thermoplastic resin (A) be a thermoplastic resin having a transition temperature of 180°C or less. It is preferable that the thermoplastic resin (A) be a propylene resin. The melting peak temperature of the propylene resin is preferably 125°C or more and 140°C or less.

It is preferable that the second thermoplastic resin (B) be a thermoplastic resin having a transition temperature of 40°C or more. It is preferable that the thermoplastic resin (B) be an ethylene resin or a styrene resin. The density of the ethylene resin and the styrene resin is preferably 0.860 g/cm$^3$ or more and 0.905 g/cm$^3$ or less, and more preferably 0.865 g/cm$^3$ or more and 0.895 g/cm$^3$ or less. Herein, the density is measured by the immersion method (23°C) set forth in JIS K 7112-1990.

Examples of the foaming agent include known foaming agents such as chemical foaming agents and physical foaming agents. A chemical foaming agent and a physical foaming agent may be used in combination.

The chemical foaming agent may be an inorganic compound or an organic compound, and two or more compounds may be used in combination.

Examples of the inorganic compound include carbonates such as ammonium carbonate; and hydrogencarbonates such as sodium hydrogencarbonate.

Examples of the organic compound include (a) organic acids or salts thereof: carboxylic acids such as citric acid, succinic acid, adipic acid, tartaric acid, and benzoic acid, and salts thereof; (b) N-nitroso compounds: N,N'-dinitrosoterephthalamide and N,N'-dinitrosopentamethylenetetramine; (c) azo compounds: azodicarbonamide, azobisisobutyronitrile, azocyclohexylnitrile, azodiaminobenzene, and barium azodicarboxylate; (d) sulfonyl hydrazide, compounds: benzenesulfonyl hydrazide, toluenesulfonyl hydrazide, p,p'-oxybis(benzenesulfenyl hydrazide), diphenylsulfone-3,3'-disulfonyl hydrazide; and (e) azide compounds: calcium azide, 4,4'-diphenyldisulfonyl azide, and p-toluenesulfonyl azide.

Examples of the physical foaming agent include inert gases such as nitrogen and carbon dioxide, and volatile organic compounds. It is preferable that the physical foaming agent be supercritical carbon dioxide, nitrogen, or a mixture thereof. Two or more physical foaming agents may be used in combination.

It is preferable that the foaming agent of the present invention be a chemical foaming agent, and more preferably an organic acid or a salt thereof, or a mixture of an organic acid or a salt thereof with a hydrogencarbonate.

The content of the foaming agent in the thermoplastic resin composition used in the production of the molded article of the present invention is preferably 0.1 parts by weight or more and 3 parts by weight or less per 100 parts by weight of the overall amount of all thermoplastic resins.

In order to increase both WC and SMD of the molded article, it is preferable to increase the content of the foaming agent. It is considered that when foaming due to an increased content of the foaming agent increases, the amount of cells contained in the molded article increases, the repulsive force felt when the molded article is compressed increases, and thus the WC increases. It is considered that when foaming due to an increased content of the foaming agent increases, the amount of cells contained in the molded article increases, surface irregularities of the molded article increase due to the influence of the cells, and thus the SMD increases.

When a chemical foaming agent is added as a foaming agent, the chemical foaming agent may be added as it is to the thermoplastic resins, or a chemical foaming agent masterbatch, the base resin of which is a thermoplastic resin, may be added to the thermoplastic resins. Preferably, the content of the chemical foaming agent in the masterbatch is 20% by weight or more and 80% by weight or less, with the total amount of the masterbatch being 100% by weight.

The thermoplastic resin composition used in the production of the molded article of the present invention may further contain an organic fiber, an inorganic filler, or a further additive.

Examples of the organic fiber include polyester fiber, polyamide fiber, polyurethane fiber, polyimide fiber, polyolefin fiber, polyacrylonitrile fiber, and vegetable fiber of kenaf or the like, and preferably polyester fiber.

When the organic fiber is contained, the content of the organic fiber is preferably 1 part by weight or more and 30 parts by weight or less per 100 parts by weight of the overall amount of the thermoplastic resins.

Examples of the inorganic filler include powdery, flaky, or granular inorganic fillers, and fibrous inorganic fillers.

Examples of the powdery, flaky, or granular inorganic fillers include talc, mica, calcium carbonate, barium sulfate, magnesium carbonate, clay, alumina, silica, calcium sulfate, silica sand, carbon black, titanium oxide, magnesium hydroxide, zeolite, molybdenum, diatomaceous earth, sericite, volcanic sand, calcium hydroxide, calcium sulfite, sodium sulfate, bentonite, and graphite.

Examples of the fibrous inorganic fillers include fibrous magnesium oxysulfate, potassium titanate fiber, magnesium hydroxide fiber, aluminum borate fiber, calcium silicate fiber, calcium carbonate fiber, carbon fiber, glass fiber, and metal fiber.

The inorganic fillers may be used singly or in combination of two or more.

The inorganic filler may have a surface that is treated with a coupling agent or a surfactant. Examples of the coupling agent include silane coupling agents and titanium coupling agents. Examples of the surfactant include higher fatty acids, higher fatty acid esters, higher fatty acid amides, and higher fatty acid salts.

The average particle size of the powdery, flaky, or granular inorganic filler is preferably 10 $\mu$m or less, and more preferably 5 $\mu$m or less.

The above average particle size is a 50% equivalent particle size (D50) determined from an integral distribution curve of an undersize method where particles are suspended in a dispersion medium such as water or alcohol and measured using a centrifugal sedimentation type particle size distribution analyzer.

The average fiber length of the fibrous inorganic filler is preferably 3 $\mu$m or more and 20 $\mu$m or less. The average fiber diameter is preferably 0.2 $\mu$m or more and 1.5 $\mu$m or less. The aspect ratio is normally 10 or more and 30 or less. The average fiber length and the average fiber diameter of the fibrous inorganic filler are those measured with an electron microscope, and the aspect ratio is the ratio of the average fiber length to the average fiber diameter (a value obtained by dividing the average fiber length by the average fiber diameter).

When the inorganic filler is contained, the content of the organic filler is preferably 0.1 part by weight or more and 30 parts by weight or less per 100 parts by weight of the overall amount of all thermoplastic resins.

Examples of the further additive include neutralizers, antioxidants, ultraviolet absorbers, light fastness agents, anti-weathering agents, lubricants, antistatic agents, anti-blocking agents, processing aids, pigments, foaming nucleating agents, plasticizers, flame retardants, crosslinking agents, crosslinking aids, luminance improvers, bactericidal agents, and light diffusing agents. These additives may be used singly or in combination of two or more. The thermoplastic resin composition may contain a higher fatty acid metal salt to prevent resin degradation products, etc. from adhering to a T die or a circular die, which will be described below, in the foamed sheet preparation step, and when the molded article of the present invention is produced by a method including the above foamed sheet preparation step and the above stretching step, it is preferable that the foamed sheet preparation step be a foamed sheet preparation step in which the thermoplastic resin composition having a content of the higher fatty acid metal salt of 50 parts by weight or less, with the content of the foaming agent being 100 parts by weight, is melt-extruded to prepare a foamed sheet. Configuring the content of the higher fatty acid metal salt to be 50 parts by weight or less, with the content of the foaming agent being 100 parts by weight, results in a foamed sheet being uneven in thickness, appearance, cell size, etc., stretching such a foamed sheet is likely to result in a molded article that satisfies the requirements of the present invention, and therefore such a content is preferable. It is more preferable that the content of the higher fatty acid metal salt be 25 parts by weight or less, with the content of the foaming agent being 100 parts by weight.

In the foamed sheet preparation step in which a foamed sheet is prepared by melt-extruding the thermoplastic resin composition containing the foaming agent, specifically, it is preferable that the thermoplastic resin composition containing the foaming agent be melt-kneaded with a single screw extruder or a twin screw extruder, and the thermoplastic resin composition be melt-extruded from a T die or a circular die and foamed, and cooled-solidified with a chill roll into a sheet form.

It is preferable that the kneading temperature in the extruder be lower than the onset of degradation temperature of the foaming agent. The kneading temperature is more preferably a temperature at least 2°C lower than the onset of degradation temperature of the foaming agent, and even more preferably at least 5°C lower than the onset of degradation temperature of the foaming agent. It is preferable that the residence time of the thermoplastic resins in the extruder be 1 minute or more and 10 minutes or less.

It is preferable that the temperature of the thermoplastic resin composition at the time of melt extrusion from a T die or a circular die be higher than the onset of degradation temperature of the foaming agent. The temperature of the thermoplastic resin composition at the time of melt extrusion is more preferably a temperature at least 5°C higher than the onset of degradation temperature of the foaming agent, and even more preferably a temperature at least 10°C higher than the onset of degradation temperature of the foaming agent. In order to increase the MMD of the molded article, it is preferable that the temperature of the thermoplastic resin composition at the time of melt extrusion be low, and in order to increase the SMD of the molded article, it is preferable that the temperature of the thermoplastic resin composition at the time of melt extrusion be high.

It is considered that when a temperature of the thermoplastic resin composition at the time of melt extrusion is increased, the flowability of the thermoplastic resin composition increases to flatten fine irregularities of the surface, and thus the MDD decreases.

It is considered that in the case that the thermoplastic resin composition contains the first thermoplastic resin (A) and the second thermoplastic resin (B), when a temperature of the thermoplastic resin composition at the time of melt extrusion is increased, the degree of surface irregularities of the molded article increases because when cells break in the vicinity of the surface of a foamed sheet, the breaking of portions composed of the thermoplastic resin (A) with a higher transition temperature is unlikely to be smoothed and the breaking of portions composed of the thermoplastic resin (B) with a lower transition temperature is likely to be smoothed, and thus the SMD increases.

Examples of the method for biaxially stretching the foamed sheet in the stretching step where the foamed sheet obtained in the foamed sheet preparation step is biaxially stretched include stretching techniques such as a sequential biaxial stretching technique, a simultaneous biaxial stretching technique, and a tubular biaxial stretching technique.

In the stretching step, it is preferable that the stretching temperature be $(T_x - 30)°C$ or more and $(T_x + 10)°C$ or less, where the transition temperature of a thermoplastic resin having the highest transition temperature among the thermoplastic resins contained in the thermoplastic resin composition is $T_x$ (unit: °C). When the thermoplastic resin composition contains two immiscible thermoplastic resins differing in transition temperature, it is preferable that the stretching temperature be $(T_A + 10)°C$ or less and preferable that the stretching temperature be equal to or more than $(T_A - 30)°C$ or $(T_B + 10)°C$ whichever is higher, where a thermoplastic resin with a higher transition temperature is a first thermoplastic resin (A), a thermoplastic resin with a lower transition temperature is a second thermoplastic resin (B), the transition temperature of the first thermoplastic resin (A) is $T_A$ (unit: °C), and the transition temperature of the second thermoplastic resin (B) is $T_B$ (unit: °C). In order to increase the SMD of the molded article, it is preferable to lower the stretching temperature. In order to increase the WC of the molded article, it is preferable to increase the stretching temperature.

It is considered that when the stretching temperature is increased, the amount of deformation of the thermoplastic resin (A) with a higher transition temperature is relatively small and the amount of deformation of the thermoplastic resin (B) with a lower transition temperature is relatively large in the post-stretching cooling process, accordingly the degree of surface irregularities of the immiscible molded article increase, and the SMD increase.

In the stretching step, the longitudinal stretch ratio is preferably 2 or more and 6 or less, and the transverse stretch ratio is preferably 2 or more and 6 or less. The ratio of the longitudinal stretch ratio to the transverse stretch ratio is preferably 0.77 or more and 1.3 or less. In order to increase the SMD of the molded article, it is preferable to increase the stretch ratio.

It is considered that in the case that the thermoplastic resin composition contains the first thermoplastic resin (A) and the second thermoplastic resin (B), the thermoplastic resin (B) with a lower transition temperature is more preferentially stretched than the thermoplastic resin (A) with a higher transition temperature during stretching, therefore an increased stretch ratio results in the thermoplastic resin (B) with a lower transition temperature being more stretched, the degree of surface irregularities of the molded article increase, and the SMD increase.

The molded article of the present invention may be used as a laminate by being laminated with a further resin or material, and in such a case, the laminate has a layer formed of the molded article of the present invention as at least one surface layer. An example of the laminate is a laminate having a surface layer formed of the molded article of the present invention and a base material layer.

Examples of the method for producing a laminate having the molded article of the present invention as at least one surface layer include a method in which a thermoplastic resin composition containing a foaming agent is melt-extruded to prepare a foamed sheet, the resulting foamed sheet is laminated with a further resin and stretched by vacuum/pressure molding, press molding, or the like, and thus a three-dimensional shape is imparted while stretching the sheet, and a method in which the molded article of the present invention is inserted into a metal mold and adhered to a further resin by blow molding or the like. By preparing a foamed sheet having two or more layers formed of different resin compositions and biaxially stretching the foamed sheet, it is also possible to configure at least one surface layer of the foamed sheet to be a layer formed of the molded article of the present invention and the other layer to be a layer different from the layer formed of the molded article of the present invention.

The molded article and the laminate of the present invention can be used in applications of resin products or the like, e.g., films for sliding-screen (shoji), bags, wrapping papers, lighting covers, ornamental films for doors such as sliding doors (fusuma), bags, and stationery.

Examples of the lighting covers include lamp shades such as covers for fluorescent lamps and incandescent lamps.

**Examples**

The present invention will be described below by way of Examples.

Measurement methods and evaluation methods for various physical property values are presented below.

(1) Mean deviation of surface frictional coefficient (MMD)

The mean deviation of surface frictional coefficient (MMD) was measured using a surface frictional coefficient tester (KES-SE) manufactured by Kato Tech Co., Ltd. In the measurement, a standard friction element (a piano wire sensor having 10 mm per side (a 1 cm x 1 cm terminal on which bent piano strings having a diameter of 0.5 mm were arranged)) was used as a sensor, the load under which friction was performed was 50 $gf/cm^2$, the measurement sensitivity was 20 g/V (volt), the rate of sample movement was 1 mm/sec, and the analysis distance was 20 mm.

(2) Standard deviation of surface roughness (SMD)

The vertical thickness fluctuation of the surface of a sample was measured using an automatic surface tester (KES-FB4-AUTO-A) manufactured by Kato Tech Co., Ltd., to determine the standard deviation of surface roughness (SMD, unit in $\mu$m). In the measurement, a terminal with a width of 5 mm including bent piano strings with a diameter of 0.5 mm was used, the load was 10 $gf/cm^2$, the rate of sample movement was 1 mm/sec, and the analysis distance was 20 mm.

(3) Work of compression (WC)

The work of compression (WC, unit in $gf \cdot cm/cm^2$) was measured using an automatic compression tester (KES-FB3-AUTO-A) manufactured by Kato Tech Co., Ltd. In the measurement, a 2 $cm^2$ circular pressure plate was used, the rate of compressive deformation was 0.02 mm/sec, and the maximum compressive load was 50 $gf/cm^2$.

(4) Melting peak temperature (Tm), glass transition temperature (Tg)

Using a differential scanning calorimeter (MDSC manufactured by TA Instruments), a 10 mg sample was heat-treated at 220°C for 5 min in a nitrogen atmosphere, then cooled to -80°C at a cooling rate of 5°C/min, and maintained at -80°C for 1 min. Next, heating was performed at a heating rate of 5°C/min from -80C to 180°C to measure a DSC curve, the peak top temperature of the highest peak of peaks on the DSC curve was regarded as the melting peak temperature, and the temperature at the inflection point of a baseline shift indicating a change of specific heat associated with glass transition behaviors was regarded as the glass transition temperature.

(5) Gloss

A 45-degree specular gloss (unit in %) was measured in accordance with JIS Z 8741-1997 using a gloss meter (GM-3D manufactured by Murakami Color Research Laboratory Co., Ltd.).

(6) Material feel sensory evaluation

A sensory test of the material feel of a film was carried out by 5 panelists, and evaluations were made as follows according to the number of panelists who evaluated the film as having a natural-texture material feel having a tactile feel that provided a combination of a rich, moist feel, softness, and tenderness.

Evaluation criteria

Rank A: 5 panelists evaluated as having the above material feel
Rank B: 3 to 4 panelists evaluated as having the above material feel
Rank C: 1 to 2 panelists evaluated as having the above material feel
Rank D: 0 panelists evaluated as having the above material feel

(7) Thickness

The thickness of a foamed sheet was measured using a linear gauge D-100S (measurement pressure 3.5 mN, gauge head diameter 5 mm) manufactured by Ozaki Mfg. Co., Ltd., and was a numerical value obtained by taking an average of measurement results at 9 points, or 3 points lengthwise x 3 points widthwise, at roughly equal intervals within a randomly selected portion having a length of 50 mm and a width of 50 mm of each sheet.

The thickness of a film was measured using a linear gauge D-100S (measurement pressure 3.5 mN, gauge head diameter 5 mm) manufactured by Ozaki Mfg. Co., Ltd., and was a numerical value obtained by taking an average of measurement results at 9 points, namely 3 points lengthwise x 3 points widthwise, at roughly equal intervals within a randomly selected portion having a length of 50 mm, and a width of 50 mm of each film.

(8) Bulk density

As for the bulk density of a foamed sheet, the weight of a sheet having a length of 50 mm and a width of 50 mm was measured, and the bulk density was calculated as the density of a cuboid having the thickness measured in the previous section.

As for the bulk density of a stretched film, the weight of a film having a length of 50 mm and a width of 50 mm was measured, and the bulk density was calculated as the density of a cuboid having the thickness measured in the previous section.

(9) Expansion ratio

The expansion ratio of a foamed sheet was determined as a value obtained by dividing the density of resins contained in the foamed sheet by the bulk density of the foamed sheet measured in the previous section. The "density of resins contained in the foamed sheet" is a weight-average value calculated from the density of each resin contained in the foamed sheet and the content of each resin. Note that the resin contained in a foaming agent masterbatch is contained only in a small amount relative to the total amount of resins contained in the foamed sheet and is therefore not taken into consideration when calculating the "density of resins contained in the foamed sheet".

(10) Area ratio of through-holes

An image of the surface of a film specimen having a length of 20 cm and a width of 20 cm was analyzed with an image analyzer to determine the area ratio (unit: %) of through-holes, with the area ($400 \text{ cm}^2$) of the specimen being 100%.

The image analyzer was a Scanner GT-X970 manufactured by Seiko Epson Corporation, and the resulting image was analyzed with image analysis software ("A-Zo Kun" version 2.20 manufactured by Asahi Kasei Corporation) on a personal computer.

[Example 1]

A pellet blend of 70 parts by weight of the following propylene resin A (melting peak temperature 132°C), 28 parts by weight of the following ethylene resin A (melting peak temperature 55°C), and 2 parts by weight of the following foaming agent masterbatch A was melt-kneaded with the extruder of a sheet molding machine (adjustable single screw extruder VS-40 and sheet processor VFC40-252) manufactured by Tanabe Plastics Machinery Co., Ltd., the melt-kneaded resin composition was extruded from a T die and foamed, and a foamed sheet was thus molded. During the foamed sheet molding, the extruder temperature was 215°C, and the line speed was 0.5 m/min. The resulting foamed sheet had a thickness of 1.5 mm, a bulk density of 0.52 $\text{g/cm}^3$, and an expansion ratio of 1.7.

Propylene Resin A: Noblen S131 manufactured by Sumitomo Chemical Co., Ltd. [melt mass flow rate (230°C, 2.16 kg): 2 g/10 min, density: 0.890 $\text{g/cm}^3$]

Ethylene Resin A: Engage 8150 manufactured by The Dow Chemical Company [melt mass flow rate (190°C, 2.16 kg): 0.5 g/10 min, density: 0.868 $\text{g/cm}^3$]

Foaming Agent Masterbatch A: Cellmic MB3274 manufactured by Sankyo Kasei Co., Ltd. [foaming agents: sodium hydrogencarbonate and citric acid (foaming agent content in foaming agent masterbatch: 40% by weight), resin: low density polyethylene (resin content in foaming agent masterbatch: 60% by weight)]

Next, the resulting foamed sheet was stretched with a biaxial-stretching tester (manufactured by Toyo Seiki Seisaku-sho Ltd.) under conditions having a stretching temperature of 130°C, a longitudinal stretch ratio of 3, and a transverse stretch ratio of 3 (the longitudinal stretch ratio/the transverse stretch ratio = 1), and a film having a thickness of 312 μm was thus obtained. The bulk density of the film was 0.28 g/cm$^3$, and the area ratio of through-holes was 0%. The evaluation results of the resulting film are shown in Table 1.

[Example 2]

A film having a thickness of 252 μm was obtained in the same manner as Example 1 except that the ethylene resin A was replaced by the following ethylene resin B (melting peak temperature 50°C). The bulk density of the film was 0.32 g/cm$^3$, and the area ratio of through-holes was 0%. The foamed sheet had a thickness of 1.4 mm, a bulk density of 0.52 g/cm$^3$, and an expansion ratio of 1.7. The evaluation results of the resulting film are shown in Table 1.

Ethylene Resin B: Engage HM7387 manufactured by The Dow Chemical Company [melt mass flow rate (190°C, 2.16 kg): 0.15 g/10 min, density: 0.870 g/cm$^3$]

[Example 3]

A film having a thickness of 193 μm was obtained in the same manner as Example 1 except that the amount of the propylene resin A was changed from 70 parts by weight to 60 parts by weight, and the ethylene resin A was replaced by 30 parts by weight of the following ethylene resin C (melting peak temperature 61°C) and 8 parts by weight of the following ethylene resin D (melting peak temperature 115°C). The bulk density of the film was 0.47 g/cm$^3$, and the area ratio of through-holes was 0%. The foamed sheet had a thickness of 1.3 mm, a bulk density of 0.62 g/cm$^3$, and an expansion ratio of 1.4. The evaluation results of the resulting film are shown in Table 1.

Ethylene Resin C: Engage 8407 manufactured by The Dow Chemical Company [melt mass flow rate (190°C, 2.16 kg): 30 g/10 min, density: 0.870 g/cm$^3$]
Ethylene Resin D: Excellen VL-100 manufactured by Sumitomo Chemical Co., Ltd. [melt mass flow rate (190°C, 2.16 kg): 0.8 g/10 min, density: 0.900 g/cm$^3$]

[Example 4]

A film having a thickness of 353 μm was obtained in the same manner as Example 1 except that the ethylene resin A was replaced by the above ethylene resin D. The bulk density of the film was 0.25 g/cm$^3$, and the area ratio of through-holes was 2.3%. The foamed sheet had a thickness of 1.5 mm, a bulk density of 0.47 g/cm$^3$, and an expansion ratio of 1.9. The evaluation results of the resulting film are shown in Table 1.

[Comparative Example 1]

The following propylene resin B (melting peak temperature 158°C) was melt-kneaded with the extruder of a sheet molding machine (adjustable single screw extruder VS-40 and sheet processor VFC40-252) manufactured by Tanabe Plastics Machinery Co., Ltd., the melt-kneaded resin was extruded from a T die, and a sheet was thus molded. During the sheet molding, the extruder temperature was 230°C, and the line speed was 0.5 m/min. The resulting sheet had a thickness of 1.1 mm, a bulk density of 0.88 g/cm$^3$, and an expansion ratio of 1.0.

Propylene Resin B: Noblen FS2011DG3 manufactured by Sumitomo Chemical Co., Ltd. [melt mass flow rate (230°C, 2.16 kg): 2.5 g/10 min, density: 0.900 g/cm$^3$]

Next, the resulting sheet was stretched with a biaxial-stretching tester (manufactured by Toyo Seiki Seisaku-sho Ltd.) under conditions having a stretching temperature of 145°C, a longitudinal stretch ratio of 3, and a transverse stretch ratio of 3 (the longitudinal stretch ratio/the transverse stretch ratio = 1), and a film having a thickness of 351 μm was thus obtained. The bulk density of the film was 0.88 g/cm$^3$, and the area ratio of through-holes was 0%. The evaluation results of the resulting film are shown in Table 1.

[Table 1]

|  | MMD | SMD (μm) | WC (gf·cm/cm$^2$) | Gloss (%) | Bulk density of film g/cm$^3$ | Material feel sensory test |
|---|---|---|---|---|---|---|
| Example 1 | 0.067 | 10.9 | 0.20 | 16 | 0.28 | Rank B |

(continued)

|  | MMD | SMD (μm) | WC (gf·cm/cm²) | Gloss (%) | Bulk density of film g/cm³ | Material feel sensory test |
|---|---|---|---|---|---|---|
| Example 2 | 0.041 | 7.9 | 0.17 | 21 | 0.32 | Rank A |
| Example 3 | 0.039 | 7.2 | 0.09 | 12 | 0.47 | Rank A |
| Example 4 | 0.077 | 10.8 | 0.16 | 20 | 0.25 | Rank B |
| Comparative Example 1 | 0.008 | 0.2 | 0.01 | - | 0.88 | Rank D |

[Example 5]

A pellet blend of 40 parts by weight of the following propylene resin A (melting peak temperature 132°C), 30 parts by weight of the following ethylene resin C (melting peak temperature 61°C), 28.5 parts by weight of the following ethylene resin D (melting peak temperature 115°C), and 1.5 parts by weight of foaming agent masterbatch A was melt-kneaded with the extruder of a sheet molding machine (adjustable single screw extruder VS-40 and sheet processor VFC40-252) manufactured by Tanabe Plastics Machinery Co., Ltd., the melt-kneaded resin composition was extruded from a T die and foamed, and a foamed sheet was thus molded. During the sheet molding, the extruder temperature was 215°C, and the line speed was 1.0 m/min. The resulting foamed sheet had a thickness of 0.8 mm, a bulk density of 0.52 g/cm³, and an expansion ratio of 1.7.

Propylene Resin A: Noblen S 131 manufactured by Sumitomo Chemical Co., Ltd. [melt mass flow rate (230°C, 2.16 kg): 2 g/10 min, density: 0.890 g/cm³]
Ethylene Resin C: Engage 8407 manufactured by The Dow Chemical Company [melt mass flow rate (190°C, 2.16 kg): 30 g/10 min, density: 0.870 g/cm³]
Ethylene Resin D: Excellen VL-100 manufactured by Sumitomo Chemical Co., Ltd. [melt mass flow rate (190°C, 2.16 kg): 0.8 g/10 min, density: 0.900 g/cm³]
Foaming Agent Masterbatch A: Cellmic MB3274 manufactured by Sankyo Kasei Co., Ltd. [foaming agents: sodium hydrogencarbonate and citric acid (foaming agent content in foaming agent masterbatch: 40% by weight), resin: low density polyethylene (resin content in foaming agent masterbatch: 60% by weight)]

Next, the resulting foamed sheet was stretched with a biaxial-stretching tester (manufactured by Toyo Seiki Seisaku-sho Ltd.) under conditions having a stretching temperature of 110°C, a longitudinal stretch ratio of 2, and a transverse stretch ratio of 2 (the longitudinal stretch ratio/the transverse stretch ratio = 1), and a film having a thickness of 243 μm was thus obtained. The bulk density of the film was 0.45 g/cm³, and the area ratio of through-holes was 0%. The evaluation results of the resulting film are shown in Table 2.

[Example 6]

A film having a thickness of 219 μm was obtained in the same manner as Example 5 except that the amount of the ethylene resin D was changed from 28.5 parts by weight to 29 parts by weight, and the amount of the foaming agent masterbatch A was changed from 1.5 parts by weight to 1 part by weight. The bulk density of the film was 0.55 g/cm³, and the area ratio of through-holes was 0%. The foamed sheet had a thickness of 0.8 mm, a bulk density of 0.55 g/cm³, and an expansion ratio of 1.6. The evaluation results of the resulting film are shown in Table 2.

[Example 7]

A film having a thickness of 320 μm was obtained in the same manner as Example 5 except that the amount of the ethylene resin D was changed from 28.5 parts by weight to 28 parts by weight, and the amount of the foaming agent masterbatch A was changed from 1.5 parts by weight to 2 parts by weight. The bulk density of the film was 0.41 g/cm³, and the area ratio of through-holes was 0%. The foamed sheet had a thickness of 0.8 mm, a bulk density of 0.54 g/cm³, and an expansion ratio of 1.6. The evaluation results of the resulting film are shown in Table 2.

[Example 8]

A film having a thickness of 283 μm was obtained in the same manner as Example 5 except that the amount of the ethylene resin D was changed from 28.5 parts by weight to 27.5 parts by weight, and the amount of foaming agent masterbatch A was changed from 1.5 parts by weight to 2.5 parts by weight. The bulk density of the film was 0.43 g/cm$^3$, and the area ratio of through-holes was 0%. The foamed sheet had a thickness of 0.8 mm, a bulk density of 0.55 g/cm$^3$, and an expansion ratio of 1.7. The evaluation results of the resulting film are shown in Table 2.

[Example 9]

A film having a thickness of 305 $\mu$m was obtained in the same manner as Example 5 except that the extruder temperature for sheet molding was changed from 215°C to 230°C. The bulk density of the film was 0.35 g/cm$^3$, and the area ratio of through-holes was 0%. The foamed sheet had a thickness of 0.7 mm, a bulk density of 0.54 g/cm$^3$, and an expansion ratio of 1.7. The evaluation results of the resulting film are shown in Table 2.

[Comparative Example 2]

A film having a thickness of 142 $\mu$m was obtained in the same manner as Example 5 except that the amount of ethylene resin D was changed from 28.5 parts by weight to 30 parts by weight, and the amount of foaming agent masterbatch A was changed from 1.5 parts by weight to 0 parts by weight. The bulk density of the film was 0.81 g/cm$^3$, and the area ratio of through-holes was 0%. The sheet had a thickness of 0.5 mm, a bulk density of 0.89 g/cm$^3$, and an expansion ratio of 1.0. The evaluation results of the resulting film are shown in Table 2.

[Example 10]

A pellet blend of 70 parts by weight of the following propylene resin A, 29 parts by weight of the following methacrylic resin (glass transition temperature 90°C), and 1 part by weight of the following foaming agent masterbatch B was melt-kneaded with the extruder of a sheet molding machine (adjustable single screw extruder VS-40 and sheet processor VFC40-252) manufactured by Tanabe Plastics Machinery Co., Ltd., the melt-kneaded resin composition was extruded from a T die and foamed, and a foamed sheet was thus molded. During the sheet molding, the extruder temperature was 215°C, and the line speed was 0.6 m/min. The resulting foamed sheet had a thickness of 1.9 mm, a bulk density of 0.51 g/cm$^3$, and an expansion ratio of 1.9.

Propylene Resin A: Noblen S 131 manufactured by Sumitomo Chemical Co., Ltd. [melt mass flow rate (230°C, 2.16 kg): 2 g/10 min, density: 0.890 g/cm$^3$]

Methacrylic Resign: Sumipex LG35 manufactured by Sumitomo Chemical Co., Ltd. [melt mass flow rate (230°C, 3.81 kg): 35 g/10 min, density: 1.190 g/cm$^3$]

Foaming Agent Masterbatch B: Cellmic MB3074 manufactured by Sankyo Kasei Co., Ltd. [foaming agents: sodium hydrogencarbonate and citric acid (foaming agent content in foaming agent masterbatch: 40% by weight), resin: low density polyethylene (resin content in foaming agent masterbatch: 60% by weight)]

Next, the resulting foamed sheet was stretched with a biaxial-stretching tester (manufactured by Toyo Seiki Seisaku-sho Ltd.) under conditions having a stretching temperature of 130°C, a longitudinal stretch ratio of 2, and a transverse stretch ratio of 2 (the longitudinal stretch ratio/the transverse stretch ratio = 1), and a film having a thickness of 714 $\mu$m was thus obtained. The bulk density of the film was 0.53 g/cm$^3$, and the area ratio of through-holes was 0%. The evaluation results of the resulting film are shown in Table 2.

[Table 2]

|  | MMD | SMD ($\mu$m) | WC (gf·cm/cm$^2$) | Gloss (%) | Bulk density of film g/cm$^3$ | Material feel sensory test |
|---|---|---|---|---|---|---|
| Example 5 | 0.054 | 8.9 | 0.18 | 1.9 | 0.45 | Rank A |
| Example 6 | 0.039 | 8.2 | 0.20 | 1.9 | 0.55 | Rank A |
| Example 7 | 0.050 | 9.6 | 0.20 | 2.0 | 0.41 | Rank A |
| Example 8 | 0.049 | 9.6 | 0.21 | 2.2 | 0.43 | Rank A |
| Example 9 | 0.042 | 10.1 | 0.20 | 2.2 | 0.35 | Rank B |

(continued)

|  | MMD | SMD (μm) | WC (gf·cm/cm$^2$) | Gloss (%) | Bulk density of film g/cm$^3$ | Material feel sensory test |
|---|---|---|---|---|---|---|
| Comparative Example 2 | 0.037 | 2.0 | 0.16 | 1.6 | 0.81 | Rank D |
| Example 10 | 0.065 | 11.5 | 0.28 | 11 | 0.53 | Rank B |

[Comparative Example 3]

A pellet blend of 100 parts by weight of the following propylene resin C (melting peak temperature 138°C), 14.2 parts by weight of the following ethylene resin E (melting peak temperature 107°C), 1.7 parts by weight of the following foaming agent masterbatch C, and 3.1 parts by weight of the following calcium stearate masterbatch A was melt-kneaded with the extruder of a sheet molding machine (adjustable single screw extruder VS-40 and sheet processor VFC40-252) manufactured by Tanabe Plastics Machinery Co., Ltd., the melt-kneaded resin composition was extruded from a T die and foamed, and a foamed sheet was thus molded. During the foamed sheet molding, the extruder temperature was 200°C, and the line speed was 0.1 m/min. The resulting foamed sheet had a thickness of 1.8 mm, a bulk density of 0.56 g/cm$^3$, and an expansion ratio of 1.5.

Propylene Resin C: W151 manufactured by Sumitomo Chemical Co., Ltd. [propylene-ethylene copolymer, melt mass flow rate (230°C, 2.16 kg): 8.0 g/10 min, density: 0.900 g/cm$^3$, content of structural unit derived from ethylene: 4.4% by weight (provided that the weight of the propylene-ethylene copolymer is 100% by weight)]
Ethylene Resin E: Sumikathene F218-0 manufactured by Sumitomo Chemical Co., Ltd. [melt mass flow rate (190°C, 2.16 kg): 1 g/10 min, density: 0.919 g/cm$^3$]
Foaming Agent Masterbatch C: Cellmic MB1023 manufactured by Sankyo Kasei Co., Ltd. [foaming agent: azodicarbonamide (foaming agent content in foaming agent masterbatch: 30% by weight), resin: low density polyethylene (resin content in foaming agent masterbatch: 70% by weight)]
Calcium Stearate Masterbatch A: MA144B manufactured by Sumika Color Co., Ltd. [calcium stearate content in masterbatch: 10% by weight, resin: polypropylene (resin content in masterbatch: 90% by weight)]

Next, the resulting foamed sheet was stretched with a biaxial-stretching tester (manufactured by Toyo Seiki Seisaku-sho Ltd.) under conditions having a stretching temperature of 125°C, a longitudinal stretch ratio of 4.5, and a transverse stretch ratio of 4.5 (the longitudinal stretch ratio/the transverse stretch ratio = 1), and a film having a thickness of 111 μm was thus obtained. The bulk density of the film was 0.42 g/cm$^3$, and the area ratio of through-holes was 0%. The evaluation results of the resulting film are shown in Table 3. When the film obtained in Comparative Example 3 and the film obtained in Example 11, which will be described below, were each held between two fingers and slid, the film obtained in Comparative Example 3 had a less rough feel and less irregularities than the film obtained in Example 11.

[Example 11]

A pellet blend of 100 parts by weight of the following propylene resin C (melting peak temperature 138°C), 13.8 parts by weight of the following ethylene resin E (melting peak temperature 107°C), and 1.7 parts by weight of the following foaming agent masterbatch C was melt-kneaded with the extruder of a sheet molding machine (adjustable single screw extruder VS-40 and sheet processor VFC40-252) manufactured by Tanabe Plastics Machinery Co., Ltd., the melt-kneaded resin composition was extruded from a T die and foamed, and a foamed sheet was thus molded. During the foamed sheet molding, the extruder temperature was 200°C, and the line speed was 0.1 m/min. The resulting foamed sheet had a thickness of 1.6 mm, a bulk density of 0.52 g/cm$^3$, and an expansion ratio of 1.6.

Propylene Resin C: W151 manufactured by Sumitomo Chemical Co., Ltd. [propylene-ethylene copolymer, melt mass flow rate (230°C, 2.16 kg): 8.0 g/10 min, density: 0.900 g/cm$^3$, content of structural unit derived from ethylene: 4.4% by weight (provided that the weight of the propylene-ethylene copolymer is 100% by weight)]
Ethylene Resin E: Sumikathene F218-0 manufactured by Sumitomo Chemical Co., Ltd. [melt mass flow rate (190°C, 2.16 kg): 1 g/10 min, density: 0.919 g/cm$^3$]
Foaming Agent Masterbatch C: Cellmic MB1023 manufactured by Sankyo Kasei Co., Ltd. [foaming agent: azodicarbonamide (foaming agent content in foaming agent masterbatch: 30% by weight), resin: low density polyethylene (resin content in foaming agent masterbatch: 70% by weight)]

Next, the resulting foamed sheet was stretched with a biaxial-stretching tester (manufactured by Toyo Seiki Seisaku-sho Ltd.) under conditions having a stretching temperature of 125°C, a longitudinal stretch ratio of 4.5, and a transverse stretch ratio of 4.5 (the longitudinal stretch ratio/the transverse stretch ratio = 1), and a film having a thickness of 122 $\mu$m was thus obtained. The bulk density of the film was 0.36 g/cm$^3$, and the area ratio of through-holes was 0%. The evaluation results of the resulting film are shown in Table 3.

[Comparative Example 4]

A pellet blend of 100 parts by weight of the following propylene resin D (melting peak temperature 129°C), 19.1 parts by weight of the following ethylene resin F (melting peak temperature 107°C), and 1.3 parts by weight of the following foaming agent masterbatch C was melt-kneaded with the extruder of a sheet molding machine (adjustable single screw extruder VS-40 and sheet processor VFC40-252) manufactured by Tanabe Plastics Machinery Co., Ltd., the melt-kneaded resin composition was extruded from a T die and foamed, and a foamed sheet was thus molded. During the foamed sheet molding, the extruder temperature was 205°C, and the line speed was 0.9 m/min. The resulting foamed sheet had a thickness of 0.55 mm and a bulk density of 0.50 g/cm$^3$.

Propylene Resin D: TW270EG manufactured by Sumitomo Chemical Co., Ltd. [propylene-ethylene-butene copolymer, melt mass flow rate (230°C, 2.16 kg): 6 g/10 min, density: 0.895 g/cm$^3$, content of structural unit derived from ethylene: 4% by weight, content of structural unit derived from butene: 4% by weight (provided that the weight of the propylene-ethylene-butene copolymer is 100% by weight)]
Ethylene Resin F: Sumikathene G201 manufactured by Sumitomo Chemical Co., Ltd. [melt mass flow rate (190°C, 2.16 kg): 2 g/10 min, density: 0.919 g/cm$^3$]
Foaming Agent Masterbatch C: Cellmic MB1023 manufactured by Sankyo Kasei Co., Ltd. [foaming agent: azodicarbonamide (foaming agent content in foaming agent masterbatch: 30% by weight), resin: low density polyethylene (resin content in foaming agent masterbatch: 70% by weight)]

Next, the resulting foamed sheet was stretched with a biaxial-stretching tester (manufactured by Toyo Seiki Seisaku-sho Ltd.) under conditions having a stretching temperature of 105°C, a longitudinal stretch ratio of 6, and a transverse stretch ratio of 1 (the longitudinal stretch ratio/the transverse stretch ratio = 6), and a film having a thickness of 257 $\mu$m was thus obtained. A plurality of through-holes were found in the film. The bulk density of the film was 0.29 g/cm$^3$, and the area ratio of through-holes was 3.7%. The evaluation results of the resulting film are shown in Table 3.

[Table 3]

|  | MMD | SMD ($\mu$m) | WC (gf·cm/cm$^2$) | Bulk density of film g/cm$^3$ | Material feel sensory test |
|---|---|---|---|---|---|
| Comparative Example 3 | 0.020 | 3.4 | 0.23 | 0.42 | Rank D |
| Example 11 | 0.024 | 4.7 | 0.20 | 0.36 | Rank B |
| Comparative Example 4 | 0.040 | 8.0 | 0.18 | 0.29 | Rank D |

**Claims**

1. A molded article formed of a thermoplastic resin composition, the molded article having a mean deviation of surface frictional coefficient (MMD) of 0.02 or more and 0.08 or less, a mean deviation of surface roughness (SMD) of 4 $\mu$m or more and 12 $\mu$m or less, a work of compression (WC) of 0.05 gf·cm/cm$^2$ or more and 0.30 gf·cm/cm$^2$ or less, a bulk density of 0.20 glcm$^3$ or more and 0.70 g/cm$^3$ or less, an area ratio of through-holes of less than 3%, and a thickness of 10 $\mu$m or more and 1000 $\mu$m or less.

2. The molded article according to claim 1, wherein the thermoplastic resin composition comprises two immiscible thermoplastic resins, and the total content of the two immiscible thermoplastic resins is 70% by weight or more, with the overall amount of all thermoplastic resins in the thermoplastic resin composition being 100% by weight.

3. The molded article according to claim 2, wherein the two immiscible thermoplastic resins are two immiscible thermoplastic resins differing in transition temperature.

4. The molded article according to claim 3, wherein
of the two immiscible thermoplastic resins differing in transition temperature, a first thermoplastic resin (A) being the resin with a higher transition temperature and a second thermoplastic resin (B) being the resin with a lower transition temperature have a difference in transition temperature of 30°C or more and 90°C or less, and the content of the first thermoplastic resin (A) is 30% by weight or more and 90% by weight or less and the content of the second thermoplastic resin (B) is 10% by weight or more and 70% by weight or less, with the total amount of the first thermoplastic resin (A) and the second thermoplastic resin (B) being 100% by weight.

5. A laminate having a layer formed of the molded article according to any one of claims 1 to 4 as at least one surface layer.

## INTERNATIONAL SEARCH REPORT

International application No.

PCT/JP2015/083206

**A. CLASSIFICATION OF SUBJECT MATTER**

*C08J5/18*(2006.01)i, *B29C47/00*(2006.01)i, *B32B5/18*(2006.01)i, *C08J9/08* (2006.01)i, *B29K105/04*(2006.01)n, *B29L7/00*(2006.01)n

According to International Patent Classification (IPC) or to both national classification and IPC

**B. FIELDS SEARCHED**

Minimum documentation searched (classification system followed by classification symbols)
C08J5/18, B29C47/00, B32B5/18, C08J9/08, B29K105/04, B29L7/00

Documentation searched other than minimum documentation to the extent that such documents are included in the fields searched
Jitsuyo Shinan Koho            1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 3-231936 A  (Mitsui Toatsu Chemicals, Inc.), 15 October 1991 (15.10.1991), claims; page 3, upper left column to upper right column; examples (Family: none) | 1-5 |
| A | JP 56-162639 A  (Sumitomo Bakelite Co., Ltd.), 14 December 1981 (14.12.1981), (Family: none) | 1-5 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 January 2016 (20.01.16) | 02 February 2016 (02.02.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002524299 A
- JP 2007231192 A

- JP H9235403 B